# EUROPEAN PATENT APPLICATION

(11) **EP 4 395 446 A1**
(43) Date of publication of application: **03.07.2024**
(21) Application number: 22909651.6
(22) Date of filing: 24.11.2022
(51) Int. Cl.: H04W 76/10

(54) **INSTRUCTION METHOD, DATA TRANSMISSION METHOD, COMMUNICATION NODE, AND STORAGE MEDIUM**

(30) Priority: 24.12.2021 CN 202111599622
(71) Applicant: ZTE Corporation, Shenzhen, Guangdong 518057 (CN)
(72) Inventor: LIU, Zhuang, Shenzhen, Guangdong 518057 (CN); MA, Zijiang, Shenzhen, Guangdong 518057 (CN); GAO, Yin, Shenzhen, Guangdong 518057 (CN)
(74) Representative: Iannone, Carlo Luigi
(86) International application number: PCT/CN2022/134052
(87) International publication number: WO 2023/116336

(57) **Abstract**

Provided are an instruction method, a data transmission method, a communication node, and a storage medium. The method includes: determining a context of a terminal; and sending an instruction message to a second communication node, where the instruction message includes interface connection information associated with the context, the interface connection information includes a terminal interface identification corresponding to a first communication node and a terminal interface identification corresponding to the second communication node, and the interface connection information is used for instructing the second communication node to transmit small data transmission, SDT, traffic data of the terminal to the first communication node through using a stored interface.

## Description

### TECHNICAL FIELD

The present application relates to the field of wireless communication network technology, for example, an instruction method, a data transmission method, a communication node, and a storage medium.

### BACKGROUND

In a wireless communication system, a base station (such as a next-generation NodeB (gNB)) may be divided into a centralized unit (CU) and a distributed unit (DU). One base station may include one CU and multiple DUs, where the CU is connected to the DUs by interfaces. Additionally, a configured grant (CG) resource is allocated to a terminal (such as a user equipment (UE)) in a radio resource control (RRC) inactive state (RRC_INACTIVE) state to be used for small data transmission (SDT). However, if the UE performs SDT by using a random access channel (RACH) resource, the DU cannot perform SDT by using a UE context stored when a CG configuration resource is generated, which wastes a resource at a base station side.

### SUMMARY

The present application provides an instruction method, a data transmission method, a communication node, and a storage medium.

Embodiments of the present application provide an instruction method applied by a first communication node. The instruction method includes: determining a context of a terminal; and sending an instruction message to a second communication node, where the instruction message includes interface connection information associated with the context, the interface connection information includes a terminal interface identification corresponding to the first communication node and a terminal interface identification corresponding to the second communication node, and the interface connection information is used for instructing the second communication node to transmit SDT traffic data of the terminal to the first communication node through a stored interface.

Embodiments of the present application further provide a data transmission method applied by a second communication node. The data transmission method includes: receiving an instruction message, where the instruction message includes interface connection information associated with a context of a terminal, and the interface connection information includes a terminal interface identification corresponding to a first communication node and a terminal interface identification corresponding to the second communication node; determining a context of the terminal and a stored interface associated with the context according to the interface connection information; and transmitting SDT traffic data of the terminal through the stored interface according to the context of the terminal.

Embodiments of the present application further provide a communication node including a memory, a processor, and a computer program stored in the memory and executable by the processor, where the processor executes the computer program to perform the preceding instruction method or data transmission method.

Embodiments of the present application further provide a computer-readable storage medium, which is configured to store a computer program which, when executed by a processor, causes the processor to perform the preceding instruction method or data transmission method.

### BRIEF DESCRIPTION OF DRAWINGS

FIG. 1 is a flowchart of an instruction method according to an embodiment.
FIG. 2 is a flowchart of a data transmission method according to an embodiment.
FIG. 3 is a schematic diagram of implementation of a small data transmission method according to an embodiment.
FIG. 4 is a schematic diagram of implementation of another small data transmission method according to an embodiment.
FIG. 5 is a schematic diagram of implementation of another small data transmission method according to an embodiment.
FIG. 6 is a schematic diagram of implementation of another small data transmission method according to an embodiment.
FIG. 7 is a structure diagram of an instruction apparatus according to an embodiment.
FIG. 8 is a structure diagram of a data transmission apparatus according to an embodiment.
FIG. 9 is a structure diagram of hardware of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

With the development of smart terminals and Internet of things terminals, some instant messaging service applications are used by more and more users, the users of such services are generally online all the time, and the users mainly transmit a small volume of data, such as a message of characters, during use. As for the services involving a small volume of data, a UE is required to frequently perform signaling link reconstruction with a radio access network (RAN), which may cause problems such as an increased signaling load of the RAN.

In the fourth generation of mobile communications (4G), to optimize support in infrequent transmission of small data packets, if a 4G network supports the UE in access to an RACH, the UE may carry corresponding small data in an RACH access request message or an RRC connection setup request message to transmit the corresponding small data to the RAN. In this case, the UE may have no need to frequently perform signaling link reconstruction with the network, that is, may transmit occasional small volumes of data.

An RRC state in 4G Long-Term Evolution (LTE) may include RRC_IDLE state (that is, an RRC idle state) and RRC_CONNECTED state (that is, an RRC connected state). RRC_INACTIVE state (that is, an RRC inactive state) is introduced into 5G. In the RRC_INACTIVE state, the UE is in a power-saving sleep state, but the UE still retains an RAN context and the RAN side also retains a UE context. In this manner, the UE that is to perform data transmission may quickly switch from the RRC_INACTIVE state to the RRC_CONNECTED state and perform the data transmission. Therefore, signaling overheads can be reduced, quick access can be implemented, a delay can be reduced, and more power can be saved.

However, for SDT, the 5G also supports the UE in performing data transmission with the RAN when the UE keeps in the RRC_INACTIVE state rather than in the RRC_CONNECTED state. The SDT of the 5G includes RACH-based SDT and CG resource-based SDT. In the case where the UE is configured with a CG resource used in the RRC_INACTIVE state, the UE in the RRC_INACTIVE state may perform the SDT by using the CG resource. However, the CG resource of the UE may have poor signal quality. In this case, even if the CG resource is configured, the UE in the RRC_INACTIVE state may perform the SDT by using an RACH access procedure.

A 5G base station (such as a gNB) may be divided into a CU and a DU. One gNB may include one CU and multiple DUs, where the CU is connected to the DUs by interfaces. When the gNB allocates a CG resource to the UE in RRC_INACTIVE state for SDT but the UE performs the SDT by using an RACH resource, the DU cannot perform SDT by using a UE context stored when a CG configuration resource is generated, which wastes a resource at a base station side.

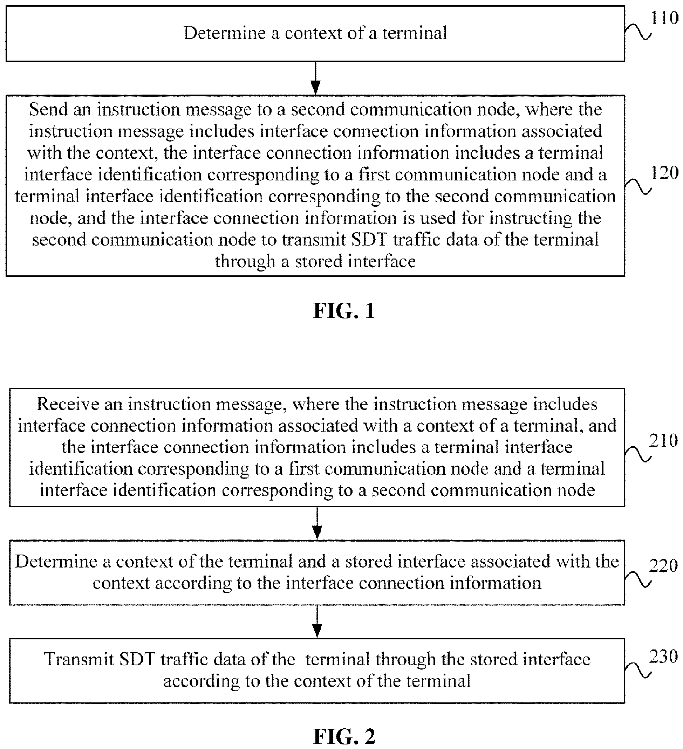

FIG. 1 is a flowchart of an instruction method according to an embodiment. As shown in FIG. 1, the method may be applied by a first communication node which may be a CU, and the method according to the embodiment includes 110 and 120.

In 110, a context of a terminal is determined.

In 120, an instruction message is sent to a second communication node, where the instruction message includes interface connection information associated with the context, the interface connection information includes a terminal interface identification corresponding to the first communication node and a terminal interface identification corresponding to the second communication node, and the interface connection information is used for instructing the second communication node to transmit SDT traffic data of the terminal to the first communication node through a stored interface.

In this embodiment, the first communication node determines the context of the terminal and then sends the instruction message to the second communication node. The second communication node may be a DU, the instruction message may include the interface connection information associated with the context, the interface connection information may include the terminal interface identification corresponding to the first communication node and the terminal interface identification corresponding to the second communication node, and the interface connection information may be used for instructing the second communication node to transmit the SDT traffic data of the terminal to the first communication node through the stored interface. The number of the stored interface may be one or more, the stored interfaces may include interfaces stored according to the context of the terminal and may specifically include a UE F1 interface at a CU side and a UE F1 interface at a DU side.

In this embodiment, the first communication node determines the context of the terminal and sends the instruction message to the second communication node so that the second communication node can transmit the SDT traffic data of the terminal according to the context of the terminal and the interface connection information associated with the context and included in the instruction message, so as to effectively utilize a resource at a base station side.

In an embodiment, the method further includes: receiving an initial uplink RRC message from the second communication node, where the initial uplink RRC message includes an RRC resume request message, and the RRC resume request message includes an Inactive Radio Network Temporary Identity (I-RNTI); identifying the terminal according to the I-RNTI; and performing SDT authentication on the terminal.

In an embodiment, the instruction message includes at least one of: an SDT authentication success message; a terminal context setup request message; or a terminal context modification message.

In an embodiment, the method further includes: receiving an uplink common control channel RRC message from the second communication node, where the uplink common control channel RRC message carries signaling data; and in the case where the uplink common control channel RRC message carries a common control channel (CCCH) message instruction, or the uplink common control channel RRC message does not carry the interface connection information associated with the context, determining, according to an I-RNTI in the signaling data carried in the uplink common control channel RRC message, a terminal to which the signaling data belongs.

In an embodiment, the method further includes: receiving a context update message from the second communication node, where the context update message includes a CG resource release instruction or an updated CG resource; and in the case where the context update message includes the CG resource release instruction, determining, according to the CG resource release instruction, whether to release or retain a context of the terminal at a side of the second communication node.

In an embodiment, the method further includes: setting CG resource-related information in an RRC release message according to the CG resource release instruction or the updated CG resource; and sending the RRC release message, where the RRC release message is used for notifying the terminal to release or update a CG resource.

In an embodiment, the method further includes: receiving an initial uplink RRC message from the second communication node, where the initial uplink RRC message carries information about an SDT category, and the SDT category includes RACH SDT or CG SDT; and in the case where the CG resource has been configured and the SDT category is the RACH SDT, releasing or updating the CG resource.

In an embodiment, the method further includes: sending a terminal context update request, where the terminal context update request includes a CG resource release instruction or a CG resource update instruction; where the CG resource release instruction is used for instructing the second communication node to release the CG resource and retain a UE context; and the CG resource update instruction is used for instructing the DU to reallocate a CG resource and update the CG resource.

Embodiments of the present application further provide a data transmission method. FIG. 2 is a flowchart of a data transmission method according to an embodiment. As shown in FIG. 2, the method may be applied by a second communication node which may be a DU, and the method according to the embodiment includes 210, 220, and 230.

In 210, an instruction message is received, where the instruction message includes interface connection information associated with a context of a terminal, and the interface connection information includes a terminal interface identification corresponding to a first communication node and a terminal interface identification corresponding to the second communication node.

In 220, a context of the terminal and a stored interface associated with the context are determined according to the interface connection information.

In 230, SDT traffic data of the terminal is transmit through the stored interface according to the context of the terminal.

In this embodiment, the second communication node receives the instruction message sent by the first communication node, where the instruction message may include the interface connection information associated with the context of the terminal, and the interface connection information may include the terminal interface identification corresponding to the first communication node and the terminal interface identification corresponding to the second communication node. Then, the second communication node may determine the context of the terminal and the stored interface associated with the context according to the interface connection information associated with the context of the terminal in the instruction message, where the number of the stored interface may be one or more and the stored interfaces may include interfaces stored according to the context of the terminal and may specifically include a UE F1 interface at a CU side and a UE F1 interface at a DU side. Finally, the second communication node may transmit the SDT through the stored interface according to the context of the terminal.

In this embodiment, the second communication node receives an instruction message from the first communication node and can determine the context of the terminal and the stored interface associated with the context according to the interface connection information in the instruction message and transmit the SDT traffic data of the terminal through the stored interface according to the context of the terminal on this basis, so as to effectively utilize a resource at a base station side.

In an embodiment, the method further includes: sending an initial uplink RRC message, where the initial uplink RRC message includes an RRC resume request message, and the RRC resume request message includes an I-RNTI.

In an embodiment, the instruction message includes at least one of: an SDT authentication success message; a terminal context setup request message; or a terminal context modification message.

In an embodiment, that the SDT traffic data of the terminal is transmitted through the stored interface according to the context of the terminal includes: in the case where the SDT traffic data of the terminal is received, transmitting, according to a stored terminal interface corresponding to the first communication node and a stored terminal interface corresponding to the second communication node, the SDT traffic data to the first communication node through a data radio bearer (DRB) data transmission tunnel associated with the terminal.

In an embodiment, the method further includes: in the case where signaling data of the terminal is received, sending an uplink common control channel RRC message, where the uplink common control channel RRC message carries the signaling data.

In an embodiment, the uplink common control channel RRC message further carries a CCCH message instruction or the interface connection information associated with the context.

In an embodiment, the method further includes: sending a context update message, where the context update message includes a CG resource release instruction or an updated CG resource.

In an embodiment, the method further includes: sending an initial uplink RRC message, where the initial uplink RRC message carries information about an SDT category, and the SDT category includes RACH SDT or CG SDT.

In an embodiment, the method further includes: receiving a terminal context update request, where the terminal context update request includes a CG resource release instruction; and releasing a CG resource and retaining a UE context according to the CG resource release instruction.

In an embodiment, the method further includes: receiving a terminal context update request, where the terminal context update request includes a CG resource update instruction; reallocating a CG resource and updating the CG resource according to the CG resource update instruction; and sending a feedback message of the terminal context update request.

A small data transmission method is exemplarily described below through different embodiments. In the following embodiments, a first communication node is a CU, and a second communication node is a DU.

### Embodiment one

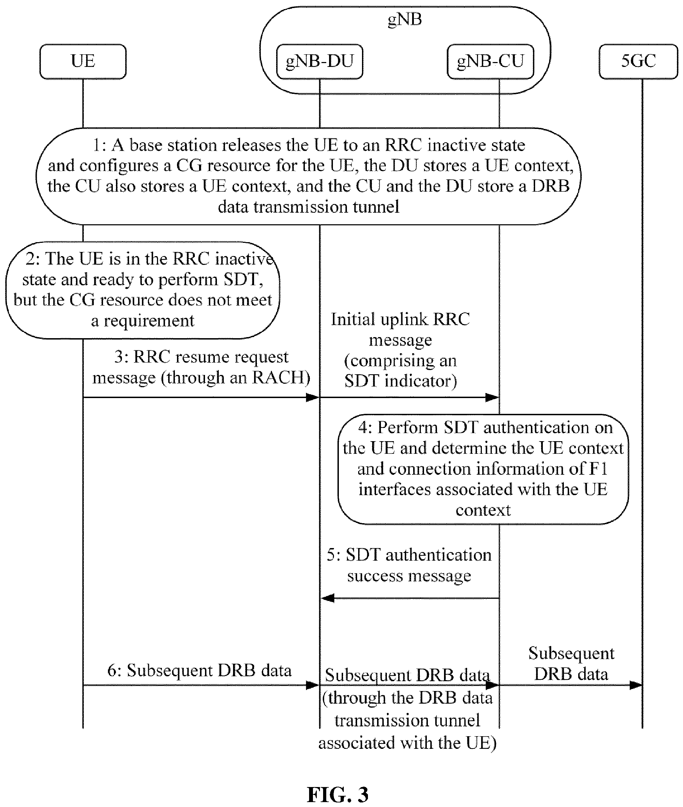

FIG. 3 is a schematic diagram of implementation of a small data transmission method according to an embodiment. As shown in FIG. 3, a specific process of the method may include 1 to 6.

In 1, at the end of traffic of a terminal (that is, a UE), a base station (such as a gNB) releases the UE to an RRC inactive state (that is, an RRC_INACTIVE state) instead of completely releasing a connection for the UE. The gNB configures a CG resource for small data transmission (SDT) for the UE, and a DU of the gNB stores a UE context (such as a Radio Link Control (RLC) configuration). A CU of the gNB also stores a UE context (such as a Packet Data Convergence Protocol (PDCP) configuration). The CU and the DU store a DRB data transmission tunnel (that is, (User plane of F1 interface) F1-U DRB tunnel). The DRB data transmission tunnel is used to connect the CU and the DU for user data transmission, in other words, a stored DRB data transmission tunnel may be referred to as a stored user plane interface/connection of F1 interfaces/connections associated with the UE context, where the F1 interfaces/connections includes a stored terminal interface corresponding to the CU and a stored terminal interface corresponding to the DU.

In 2, the UE is in the RRC inactive state and ready to perform the SDT. However, the CG resource does not meet a requirement, for example, a received signal quality corresponding to the CG resource does not meet a threshold requirement, or an RRC resume request message sent through the CG resource fails to be transmitted to the gNB. Then, the UE may prepare to send the RRC resume request message to the gNB through an RACH.

In 3, the UE sends the RRC resume request message (that is, RRC RESUME REQUEST) to the gNB through the RACH (that is, the UE sends the RRC resume request message to the gNB using the RACH resource), and after receiving the RRC resume request message, the DU of the gNB identifies that the UE needs to perform the SDT. The DU encapsulates the received RRC resume request message into an initial uplink RRC message (that is, Initial UL RRC Message) and sends the initial uplink RRC message to the CU, where the initial uplink RRC message comprises an SDT indicator which is used to indicate the SDT, that is, the SDT indicator is used for indicating the CU that the initial uplink RRC message is used for the SDT.

In 4, the CU receives from the DU the RRC resume request message included in the initial uplink RRC message, identifies the UE through an I-RNTI included in the RRC resume request message, performs SDT authentication on the UE, and determines the corresponding UE context (that is, UE Context) at the CU side and connection information of F1 interfaces associated with the UE context, where the connection information may include a terminal F1 interface identification (ID) corresponding to the CU and a terminal F1 interface ID corresponding to the DU (that is, a UE F1 interface ID at the CU side and a UE F1 interface ID at the DU side that are associated with the UE context are determined), where the UE F1 interface ID at the CU side may be represented as CU UE FlAP ID, the UE F1 interface ID at the DU side may be represented as DU UE FlAP ID, and FlAP may denote an F1 interface.

In 5, the CU sends an instruction message such as an SDT authentication success message (that is, SDT Authentication Message) to the DU, where the instruction message includes the UE F1 interface ID at the CU side and the UE F1 interface ID at the DU side that are associated with the UE context. After receiving the message, the DU determines a context of the UE at the DU side through (CU UE FlAP ID, DU UE FlAP ID) and determines F1 interfaces/connections associated with the UE context. It is to be noted that the instruction message sent by the CU to the DU is not limited to the SDT authentication success message, and the CU may also carry (CU UE FlAP ID, DU UE FlAP ID) in a UE context setup request message/modification message (that is, UE CONTEXT SETUP/MODIFICATION REQUEST) to notify the DU to determine the context of the UE. That is, the instruction message sent by the CU to the DU includes at least one of: the SDT authentication success message; a terminal context setup request message; or a terminal context modification message.

In 6, in the subsequent SDT process, the UE sends DRB data (that is, SDT traffic data of the terminal) to the DU through an RACH ( that is, using an RACH scheduling resource) or using a CG scheduling resource, and after receiving the DRB data (that is, SDT traffic data of the terminal), the DU transmits the DRB data to the CU through a stored user plane interface/connection of the determined F1 connections associated with the UE context, i.e., a DRB data transmission tunnel associated with the UE. After receiving the DRB data, the CU sends the DRB data to a 5G core network (that is, 5GC).

### Embodiment two

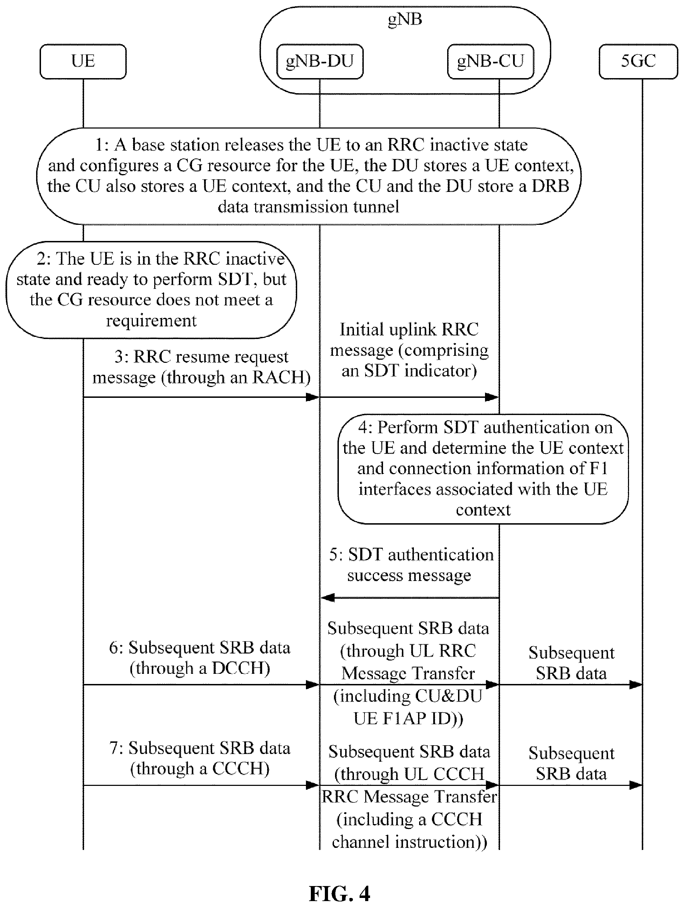

FIG. 4 is a schematic diagram of implementation of another small data transmission method according to an embodiment. As shown in FIG. 4, a specific process of the method may include 1 to 7.

In 1, at the end of traffic of a terminal (that is, a UE), a base station (such as a gNB) releases the UE to an RRC inactive state (that is, an RRC_INACTIVE state) instead of completely releasing a connection for the UE. The gNB configures a CG resource for small data transmission (SDT) for the UE, and a DU of the gNB stores a UE context (such as an RLC configuration). A CU of the gNB also stores a UE context (such as a PDCP configuration). The CU and the DU store a DRB data transmission tunnel (that is, F1-U DRB tunnel).

In 2, the UE is in the RRC inactive state and ready to perform the SDT. However, the CG resource does not meet a requirement, for example, a received signal quality corresponding to the CG resource does not meet a threshold requirement, or an RRC resume request message sent through the CG resource fails to be transmitted to the gNB. Then, the UE may prepare to send the RRC resume request message to the gNB through an RACH.

In 3, the UE sends the RRC resume request message (that is, RRC RESUME REQUEST) to the gNB through the RACH, and after receiving the RRC resume request message, the DU of the gNB identifies that the UE needs to perform the SDT. The DU encapsulates the received RRC resume request message into an initial uplink RRC message (that is, Initial UL RRC Message) and sends the initial uplink RRC message to the CU, where the initial uplink RRC message comprises an SDT indicator which used to indicate the SDT, that is, the SDT indicator is used for indicating the CU that the initial uplink RRC message is used for the SDT.

In 4, the CU receives from the DU the RRC resume request message included in the initial uplink RRC message, identifies the UE through an I-RNTI included in the RRC resume request message, performs SDT authentication on the UE, and determines the corresponding UE context (that is, UE Context) at the CU side and connection information of F1 interfaces associated with the UE context, where the connection information may include a terminal F1 interface ID corresponding to the CU and a terminal F1 interface ID corresponding to the DU (that is, a UE F1 interface ID at the CU side and a UE F1 interface ID at the DU side that are associated with the UE context are determined), where the UE F1 interface ID at the CU side may be represented as CU UE FlAP ID, the UE F1 interface ID at the DU side may be represented as DU UE FlAP ID, and FlAP may denote an F1 interface.

In 5, the CU sends an instruction message such as an SDT authentication success message (that is, SDT Authentication Message) to the DU, where the instruction message includes the UE F1 interface ID at the CU side and the UE F1 interface ID at the DU side that are associated with the UE context. After receiving the message, the DU determines a context of the UE at the DU side through (CU UE FlAP ID, DU UE FlAP ID) and determines F1 interfaces/connections associated with the UE context. It is to be noted that the instruction message sent by the CU to the DU is not limited to the SDT authentication success message, and the CU may also carry (CU UE FlAP ID, DU UE FlAP ID) in a UE context setup request message/modification message (that is, UE CONTEXT SETUP/MODIFICATION REQUEST) to notify the DU to determine the context of the UE. That is, the instruction message sent by the CU to the DU includes at least one of: the SDT authentication success message; a terminal context setup request message; or a terminal context modification message.

In 6, the UE sends subsequent signaling data such as a signaling radio bearer (SRB) protocol data unit (PDU) or a non-access stratum (NAS) PDU to the DU through a corresponding dedicated control channel (DCCH) resource scheduled by the RACH or the CG, and the DU may identify, according to resources scheduled for different UEs, which UE the signaling data belongs to. The DU sends an uplink RRC information transfer message (that is, UL RRC Message Transfer) carrying the signaling data (that is, SRB PDU or NAS PDU) to the CU, where UL RRC Message Transfer carries the UE FlAP ID at the CU side and the UE FlAP ID at the DU side that are associated with the UE context, which are used for instructing the CU which UE the signaling data belongs to.

In 7, the UE sends the subsequent signaling data (that is, SRB PDU or NAS PDU) to the DU through a corresponding CCCH resource scheduled by the RACH and carries the I-RNTI of the UE in the signaling data. Since the CCCH is a common channel, the DU cannot identify which UE the signaling data belongs to. The DU sends an uplink CCCH RRC information transfer message (that is, UL CCCH RRC Message Transfer) carrying the signaling data (that is, SRB PDU or NAS PDU) to the CU, where the message optionally carries a CCCH message instruction for instructing the CU that the signaling data carried in the message is CCCH channel signaling. After the CU receives UL CCCH RRC Message Transfer, if the message carries the CCCH message instruction or the message does not carry the UE FlAP ID at the CU side and the UE FlAP ID at the DU side that are associated with the UE context (that is, CU&DU UE FlAP ID), the CU identifies, according to the I-RNTI of the UE in the signaling data carried in the message, which UE the signaling data belongs to.

### Embodiment three

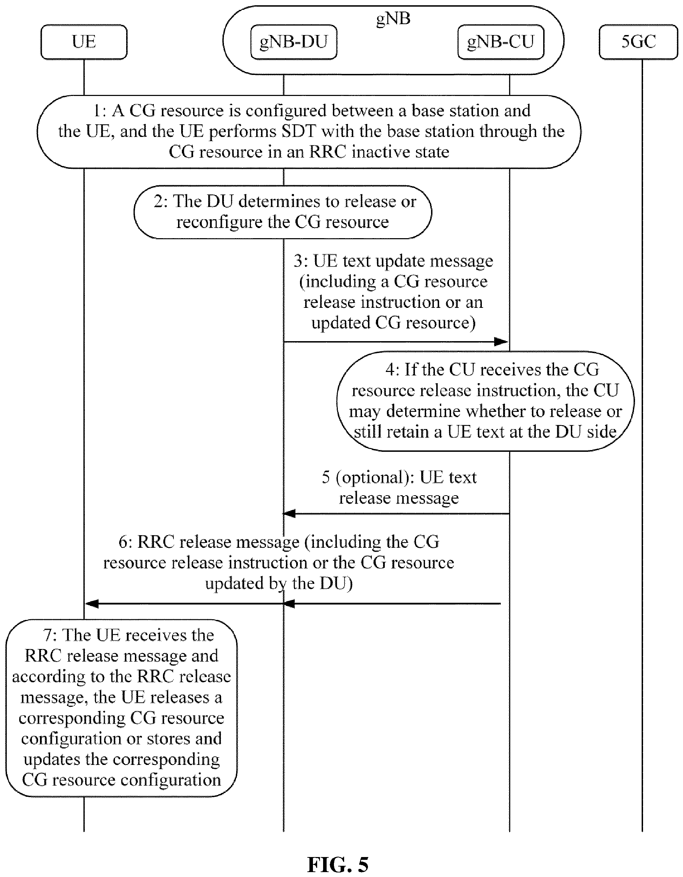

FIG. 5 is a schematic diagram of implementation of another small data transmission method according to an embodiment. As shown in FIG. 5, a specific process of the method may include 1 to 7.

In 1, a CG resource is configured between a base station and a UE, and the UE in an RRC inactive state performs SDT with the base station through the CG resource.

In 2, a DU determines to release or reconfigure (that is, update) the CG resource for some reasons, for example, a valid timer of the CG resource configured at the DU side expires or a load at the DU side is excessively large.

In 3, the DU sends a UE context update message (that is, UE Context Modification Required) to a CU, where the UE context update message includes a CG resource release instruction or an updated CG resource. (It is not limited to the UE context update message).

In 4, the CU receives UE Context Modification Required, and if the CG resource release instruction is included, the CU may determine whether to release or still retain a UE text (that is, a UE context) at the DU side. (It is not limited to the UE context update message).

In 5, if the CU determines that the context at the DU side is released, the CU sends a UE text release message (that is, UE Context Release Request) to the DU, and after receiving the UE text release message, the DU releases the corresponding context at the DU side (such as an RLC entity and configuration, entities and configurations of a physical layer and an MAC layer, and an F1 interface tunnel between the CU and the DU).

In 6, the CU sends an RRC release message to the UE via the DU to instruct the UE to be released to the inactive state. According to the CG resource release instruction or the CG resource updated by the DU, which is included in a message such as UE Context Modification Required received by the CU from the DU side, the CU sets CG resource-related information in the RRC release message, for example, sets the CG resource release instruction or the updated CG resource. The CU sends the RRC release message to the UE to notify the UE to release the CG resource or update the CG resource.

In 7, the UE receives the RRC release message; if the message includes the CG resource release instruction, the UE releases a corresponding CG resource configuration; if the message includes the updated CG resource, the UE stores and updates the corresponding CG resource configuration.

### Embodiment four

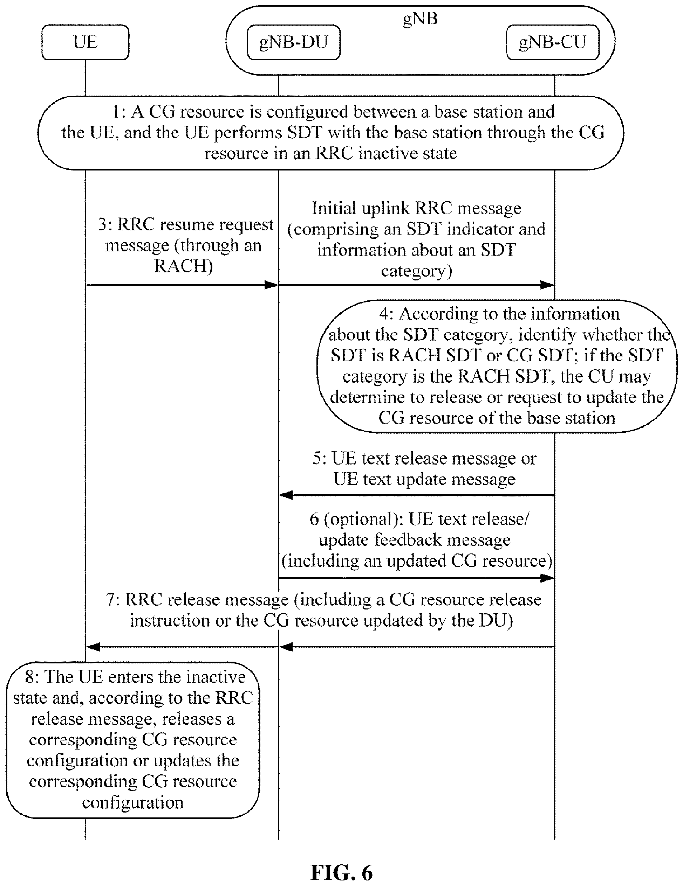

FIG. 6 is a schematic diagram of implementation of another small data transmission method according to an embodiment. As shown in FIG. 6, a specific process of the method may include 1 to 8.

In 1, at the end of traffic of a UE, a base station (such as a gNB) releases the UE to an RRC inactive state (that is, an RRC_INACTIVE state) instead of completely releasing a connection for the UE. The gNB configures a CG resource for small data transmission (SDT) for the UE, and a DU of the gNB stores a UE context (such as an RLC configuration). A CU of the gNB also stores a UE context (such as a PDCP configuration). The CU and the DU store a DRB data transmission tunnel (that is, F1-U DRB tunnel).

In 2, the UE is in the RRC inactive state and ready to perform the SDT. However, the CG resource does not meet a requirement, for example, a received signal quality corresponding to the CG resource does not meet a threshold requirement, or an RRC resume request message sent through the CG resource fails to be transmitted to the gNB. Then, the UE prepares to send the RRC resume request message to the gNB through an RACH.

In 3, the UE sends the RRC resume request message (that is, RRC RESUME REQUEST) to the gNB through the RACH, and after receiving the RRC resume request message, the DU of the gNB identifies that the UE needs to perform the SDT and identifies that a type of the SDT is RACH SDT. The DU encapsulates the received RRC resume request message into an initial uplink RRC message (that is, Initial UL RRC Message) and sends the initial uplink RRC message to the CU, where the initial uplink RRC message comprises an SDT indicator which is used to indicate the SDT, that is, the SDT indicator is used for indicating the CU that the initial uplink RRC message is used for the SDT, and the initial uplink RRC message carries information about an SDT category for instructing the CU whether the SDT is the RACH SDT or CG SDT.

In 4, the CU receives the initial uplink RRC message and identifies, according to the carried information about the SDT category, whether the SDT is the RACH SDT or the CG SDT. If the CG resource has been configured at the base station side and the SDT category is the RACH SDT, the CU may determine to release or request to update the CG resource of the base station.

In 5, if the CU determines that the context at the DU side is also released, the CU sends UE Context Release Request (which may be referred to as a UE context release request message or a UE text release message) to the DU. Otherwise, the CU sends UE Context Modification Request (which may be referred to as a UE context update request message or a UE context update message) to the DU, where the message includes a CG resource release instruction for instructing the DU to release the CG resource and retain the UE context or includes a CG resource update instruction for instructing the DU to reallocate a CG resource and update the CG resource.

In 6, if the DU receives UE Context Release Request (that is, a UE context release request), the DU releases the corresponding context at the DU side (such as an RLC entity and configuration, entities and configurations of a physical layer and an MAC layer, and an F1 interface tunnel between the DU and the CU).

If the DU receives UE Context Modification Request (that is, a UE context update request) sent by the CU and the message includes the CG resource release instruction, the DU does not release the context at the DU side (that is, retains the UE context at the DU side, such as the RLC entity and configuration, the entities and configurations of the physical layer and the MAC layer, and the F1 interface tunnel between the DU and the CU) and releases the CG resource at the DU side. After the DU releases the original CG resource at the DU side, the DU may optionally reallocate a new CG resource and send the new CG resource to the CU through a feedback message of the UE context update request.

If the DU receives UE Context Modification Request (that is, the UE context update request) sent by the CU and the message includes the CG resource update instruction, the DU reallocates a CG resource, updates the CG resource, and sends the updated CG resource to the CU through the feedback message of the UE context update request (which may be referred to as a UE text update feedback message).

In 7, the CU sends an RRC release message to the UE via the DU to instruct the UE to be released to the inactive state. The RRC release message includes the CG resource release instruction or the CG resource updated by the DU.

In 8, the UE receives the RRC release message; if the RRC release message includes the CG resource release instruction, the UE releases a corresponding CG resource configuration; if the RRC release message includes the updated CG resource, the UE stores and updates the corresponding CG resource configuration.

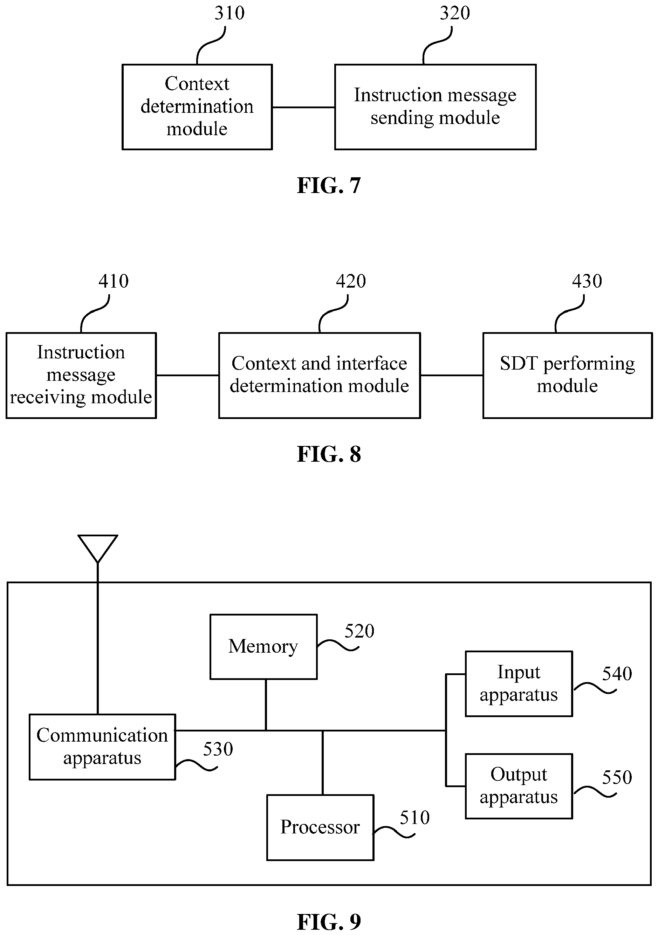

Embodiments of the present application further provide an instruction apparatus. FIG. 7 is a structure diagram of an instruction apparatus according to an embodiment. As shown in FIG. 7, the instruction apparatus includes a context determination module 310 and an instruction message sending module 320.

The context determination module 310 is configured to determine a context of a terminal.

The instruction message sending module 320 is configured to send an instruction message to a second communication node, where the instruction message includes interface connection information associated with the context, the interface connection information includes a terminal interface identification corresponding to a first communication node and a terminal interface identification corresponding to the second communication node, and the interface connection information is used for instructing the second communication node to transmit SDT traffic data of the terminal through a stored interface.

According to the instruction apparatus in this embodiment, the first communication node determines the context of the terminal and sends the instruction message to the second communication node so that the second communication node can transmit the SDT traffic data of the terminal according to the context of the terminal and the interface connection information associated with the context and included in the instruction message, so as to effectively utilize a resource at a base station side.

In an embodiment, the apparatus further includes a first RRC message receiving module, a terminal identification module, and an authentication module.

The first RRC message receiving module is configured to receive an initial uplink RRC message from the second communication node, where the initial uplink RRC message includes an RRC resume request message, and the RRC resume request message includes an I-RNTI.

The terminal identification module is configured to identify the terminal according to the I-RNTI.

The authentication module is configured to perform SDT authentication on the terminal.

In an embodiment, the instruction message includes at least one of: an SDT authentication success message; a terminal context setup request message; or a terminal context modification message.

In an embodiment, the apparatus further includes a second RRC message receiving module and a terminal determination module.

The second RRC message receiving module is configured to receive an uplink common control channel RRC message from the second communication node, where the uplink common control channel RRC message carries signaling data.

The terminal determination module is configured to, in the case where the uplink common control channel RRC message carries a CCCH message instruction, or the uplink common control channel RRC message does not carry the interface connection information associated with the context, determine, according to an I-RNTI in the signaling data carried in the uplink common control channel RRC message, a terminal to which the signaling data belongs.

In an embodiment, the apparatus further includes an update message receiving module and a context control module.

The update message receiving module is configured to receive a context update message from the second communication node, where the context update message includes a CG resource release instruction or an updated CG resource.

The context control module is configured to, in the case where the context update message includes the CG resource release instruction, determine, according to the CG resource release instruction, whether to release or retain a context of the terminal at a side of the second communication node.

In an embodiment, the apparatus further includes an information setting module and a release message sending module.

The information setting module is configured to set CG resource-related information in an RRC release message according to the CG resource release instruction or the updated CG resource.

The release message sending module is configured to send the RRC release message, where the RRC release message is used for notifying the terminal to release or update a CG resource.

In an embodiment, the apparatus further includes a third RRC message receiving module and a CG resource control module.

The third RRC message receiving module is configured to receive an initial uplink RRC message from the second communication node, where the initial uplink RRC message carries information about an SDT category, and the SDT category includes RACH SDT or CG SDT.

The CG resource control module is configured to, in the case where the CG resource has been configured and the SDT category is the RACH SDT, release or update the CG resource.

In an embodiment, the apparatus further includes an update request sending module.

The update request sending module is configured to send a terminal context update request, where the terminal context update request includes a CG resource release instruction or a CG resource update instruction; where the CG resource release instruction is used for instructing the second communication node to release the CG resource and retain a UE context; and the CG resource update instruction is used for instructing a DU to reallocate a CG resource and update the CG resource.

The instruction apparatus provided in this embodiment and the instruction method provided in the preceding embodiment belong to the same inventive concept. For technical details not described in detail in this embodiment, reference may be made to any one of the preceding embodiments, and this embodiment has the same beneficial effects as the instruction method performed.

Embodiments of the present application further provide a data transmission apparatus. FIG. 8 is a structure diagram of a data transmission apparatus according to an embodiment. As shown in FIG. 8, the data transmission apparatus includes an instruction message receiving module 410, a context and interface determination module 420, and an SDT performing module 430.

The instruction message receiving module 410 is configured to receive an instruction message, where the instruction message includes interface connection information associated with a context of a terminal, and the interface connection information includes a terminal interface identification corresponding to a first communication node and a terminal interface identification corresponding to a second communication node.

The context and interface determination module 420 is configured to determine a context of the terminal and a stored interface associated with the context according to the interface connection information.

The SDT performing module 430 is configured to transmit SDT traffic data of the terminal through the stored interface according to the context of the terminal.

According to the data transmission apparatus in this embodiment, the second communication node receives an instruction message from the first communication node and can determine the context of the terminal and the stored interface associated with the context according to the interface connection information in the instruction message and transmit the SDT traffic data of the terminal through the stored interface according to the context of the terminal on this basis, so as to effectively utilize a resource at a base station side.

In an embodiment, the apparatus further includes a first RRC message sending module.

The first RRC message sending module is configured to send an initial uplink RRC message, where the initial uplink RRC message includes an RRC resume request message, and the RRC resume request message includes an I-RNTI.

In an embodiment, the instruction message includes at least one of: an SDT authentication success message; a terminal context setup request message; or a terminal context modification message.

In an embodiment, the SDT performing module specifically includes a transmission unit.

The transmission unit is configured to, in the case where SDT traffic data of the terminal is received, transmit, according to a stored terminal interface corresponding to the first communication node and a stored terminal interface corresponding to the second communication node, the SDT traffic data to the first communication node through a DRB data transmission tunnel associated with the terminal.

In an embodiment, the apparatus further includes a second RRC message sending module.

The second RRC message sending module is configured to, in the case where signaling data of the terminal is received, send an uplink common control channel RRC message, where the uplink common control channel RRC message carries the signaling data.

In an embodiment, the uplink common control channel RRC message further carries a CCCH message instruction or the interface connection information associated with the context.

In an embodiment, the apparatus further includes an update message sending module.

The update message sending module is configured to send a context update message, where the context update message includes a CG resource release instruction or an updated CG resource.

In an embodiment, the apparatus further includes a third RRC message sending module.

The third RRC message sending module is configured to send an initial uplink RRC message, where the initial uplink RRC message carries information about an SDT category, and the SDT category includes RACH SDT or CG SDT.

In an embodiment, the apparatus further includes a first update request receiving module and a release module.

The first update request receiving module is configured to receive a terminal context update request, where the terminal context update request includes a CG resource release instruction.

The release module is configured to release a CG resource and retain a UE context according to the CG resource release instruction.

In an embodiment, the apparatus further includes a second update request receiving module, a CG resource update module, and a feedback message sending module.

The second update request receiving module is configured to receive a terminal context update request, where the terminal context update request includes a CG resource update instruction.

The CG resource update module is configured to reallocate a CG resource and update the CG resource according to the CG resource update instruction.

The feedback message sending module is configured to send a feedback message of the terminal context update request.

The data transmission apparatus provided in this embodiment and the data transmission method provided in the preceding embodiment belong to the same inventive concept. For technical details not described in detail in this embodiment, reference may be made to any one of the preceding embodiments, and this embodiment has the same beneficial effects as the data transmission method performed.

Embodiments of the present application further provide a communication node, where the communication node may be a first communication node or a second communication node. FIG. 9 is a structure diagram of hardware of a communication node according to an embodiment. As shown in FIG. 9, the communication node provided in the present application includes a memory 520, a processor 510, and a computer program stored in the memory and executable by the processor, where the processor 510 executes the computer program to perform the preceding instruction method or data transmission method.

The communication node may further include the memory 520. One or more processors 510 may be provided in the communication node, and one processor 510 is shown as an example in FIG. 9. The memory 520 is configured to store one or more programs, where the one or more programs are executed by the one or more processors 510 to cause the one or more processors 510 to perform the instruction method or the data transmission method in the embodiments of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected through a bus or in other manners, and the connection through the bus is shown as an example in FIG. 9.

The input apparatus 540 may be used for receiving input digital or character information and generating keying signal input related to user settings of the communication node and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules corresponding to the instruction method in the embodiments of the present application (for example, the context determination module 310 and the instruction message sending module 320 in the instruction apparatus) or program instructions/modules corresponding to the data transmission method in the embodiments of the present application (for example, the instruction message receiving module 410, the context and interface determination module 420, and the SDT performing module 430 in the data transmission apparatus). The memory 520 may include a program storage region and a data storage region. The program storage region may store an operating system and an application program required by at least one function. The data storage region may store data created according to the use of the communication node. Additionally, the memory 520 may include a high-speed random-access memory and may also include a non-volatile memory, such as at least one disk memory, a flash memory, or another non-volatile solid-state memory. In some examples, the memory 520 may further include memories remotely disposed relative to the processor 510, and these remote memories may be connected to the communication node via a network. Examples of the preceding network include, but are not limited to, the Internet, an intranet, a local area network, a mobile communication network, and a combination thereof.

Embodiments of the present application further provide a storage medium. The storage medium stores a computer program which, when executed by a processor, causes the processor to perform the instruction method or the data transmission method according to any one of the embodiments of the present application. The instruction method includes: determining a context of a terminal; and sending an instruction message to a second communication node, where the instruction message includes interface connection information associated with the context, the interface connection information includes a terminal interface identification corresponding to a first communication node and a terminal interface identification corresponding to the second communication node, and the interface connection information is used for instructing the second communication node to transmit SDT traffic data of the terminal through a stored interface. The data transmission method includes: receiving an instruction message, where the instruction message includes interface connection information associated with a context of a terminal, and the interface connection information includes a terminal interface identification corresponding to a first communication node and a terminal interface identification corresponding to a second communication node; determining a context of the terminal and a stored interface associated with the context according to the interface connection information; and transmitting SDT traffic data of the terminal through the stored interface according to the context of the terminal.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may also include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are merely example embodiments of the present application and are not intended to limit the scope of the present application.

It is to be understood by those skilled in the art that the term "user terminal" encompasses any suitable type of wireless user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a ROM, a RAM, or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An instruction method, applied to a first communication node, comprising:
determining a context of a terminal; and
sending an instruction message to a second communication node, wherein the instruction message comprises interface connection information associated with the context, the interface connection information comprises a terminal interface identification corresponding to the first communication node and a terminal interface identification corresponding to the second communication node, and the interface connection information is used to instruct the second communication node to transmit small data transmission, SDT, traffic data of the terminal to the first communication node through a stored interface.

2. The method according to claim 1, further comprising:
receiving an initial uplink radio resource control, RRC, message from the second communication node, wherein the initial uplink RRC message comprises an RRC resume request message, and the RRC resume request message comprises an Inactive Radio Network Temporary Identity, I-RNTI;
identifying the terminal according to the I-RNTI; and
performing SDT authentication on the terminal.

3. The method according to claim 1, wherein the instruction message comprises at least one of:
an SDT authentication success message; a terminal context setup request message; or a terminal context modification message.

4. The method according to claim 1, further comprising:
receiving an uplink common control channel RRC message from the second communication node, wherein the uplink common control channel RRC message carries signaling data; and
in response to the uplink common control channel RRC message carrying a common control channel, CCCH, message instruction or not carrying the interface connection information associated with the context, determining, according to an I-RNTI in the signaling data carried in the uplink common control channel RRC message, a terminal to which the signaling data belongs.

5. The method according to claim 1, further comprising:
receiving a context update message from the second communication node, wherein the context update message comprises a configured grant, CG, resource release instruction or an updated CG resource; and
in response to the context update message comprising the CG resource release instruction, determining, according to the CG resource release instruction, whether to release or retain a context of the terminal at a side of the second communication node.

6. The method according to claim 5, further comprising:
setting CG resource-related information in an RRC release message according to the CG resource release instruction or the updated CG resource; and
sending the RRC release message, wherein the RRC release message is used to notify the terminal to release or update a CG resource.

7. The method according to claim 1, further comprising:
receiving an initial uplink RRC message from the second communication node, wherein the initial uplink RRC message carries information about an SDT category, and the SDT category comprises random access channel, RACH, SDT or CG SDT; and
in response to a CG resource having been configured and the SDT category being the RACH SDT, releasing or updating the CG resource.

8. The method according to claim 1, further comprising:
sending a terminal context update request, wherein the terminal context update request comprises a CG resource release instruction or a CG resource update instruction;
wherein the CG resource release instruction is used for instructing the second communication node to release a CG resource and retain a context of the terminal; and
the CG resource update instruction is used for instructing the second communication node to reallocate a CG resource and update the CG resource.

9. A data transmission method, applied to a second communication node, comprising:
receiving an instruction message, wherein the instruction message comprises interface connection information associated with a context of a terminal, and the interface connection information comprises a terminal interface identification corresponding to a first communication node and a terminal interface identification corresponding to the second communication node;
determining a context of the terminal and a stored interface associated with the context according to the interface connection information; and
according to the context of the terminal, transmitting small data transmission, SDT, traffic data of the terminal to the first communication node through the stored interface.

10. The method according to claim 9, further comprising:
sending an initial uplink radio resource control, RRC, message, wherein the initial uplink RRC message comprises an RRC resume request message, and the RRC resume request message comprises an Inactive Radio Network Temporary Identity, I-RNTI.

11. The method according to claim 9, wherein the instruction message comprises at least one of:
an SDT authentication success message; a terminal context setup request message; or a terminal context modification message.

12. The method according to claim 9, wherein transmitting the SDT traffic data of the terminal to the first communication node through the stored interface according to the context of the terminal comprises:
in response to the SDT traffic data of the terminal being received, according to a stored terminal interface corresponding to the first communication node and a stored terminal interface corresponding to the second communication node, transmitting the SDT traffic data of the terminal to the first communication node through a data radio bearer, DRB, data transmission tunnel associated with the terminal.

13. The method according to claim 9, further comprising:
in response to signaling data of the terminal being received, sending an uplink common control channel RRC message, wherein the uplink common control channel RRC message carries the signaling data.

14. The method according to claim 13, wherein
the uplink common control channel RRC message further carries a common control channel, CCCH, message instruction or the interface connection information associated with the context.

15. The method according to claim 9, further comprising:
sending a context update message, wherein the context update message comprises a configured grant, CG, resource release instruction or an updated CG resource.

16. The method according to claim 9, further comprising:
sending an initial uplink RRC message, wherein the initial uplink RRC message carries information about an SDT category, and the SDT category comprises random access channel, RACH, SDT or CG SDT.

17. The method according to claim 9, further comprising:
receiving a terminal context update request, wherein the terminal context update request comprises a CG resource release instruction; and
releasing a CG resource and retaining the context of the terminal according to the CG resource release instruction.

18. The method according to claim 9, further comprising:
receiving a terminal context update request, wherein the terminal context update request comprises a CG resource update instruction;
reallocating a CG resource and updating a CG resource according to the CG resource update instruction; and
sending a feedback message of the terminal context update request.

19. A communication node, comprising a memory, a processor, and a computer program stored in the memory and executable by the processor, wherein the processor executes the computer program to perform the instruction method according to any one of claims 1 to 8 or the data transmission method according to any one of claims 9 to 18.

20. A computer-readable storage medium, which is configured to store a computer program which, when executed by a processor, causes the processor to perform the instruction method according to any one of claims 1 to 8 or the data transmission method according to any one of claims 9 to 18.
